# EUROPEAN PATENT APPLICATION

(11) **EP 4 498 089 A1**
(43) Date of publication of application: **29.01.2025**
(21) Application number: 22932497.5
(22) Date of filing: 07.12.2022
(51) Int. Cl.: G01N 35/00

(54) **AUTOMATIC ANALYSIS SYSTEM**

(30) Priority: 22.03.2022 JP 2022045592
(71) Applicant: HITACHI HIGH-TECH CORPORATION, Tokyo 105-6409 (JP)
(72) Inventor: KAWAME Kohei, Tokyo 105-6409 (JP); SHIMODA Akihiro, Tokyo 105-6409 (JP); HAGIWARA Takaaki, Tokyo 105-6409 (JP)
(74) Representative: MERH-IP Matias Erny Reichl Hoffmann Patentanwälte PartG mbB
(86) International application number: PCT/JP2022/045133
(87) International publication number: WO 2023/181515

(57) **Abstract**

The present invention provides an automatic analysis system whereby the time from when a specimen is received to when a result is output can be reduced even when an automatic analyzer is in a standby state. Provided is an automatic analysis system comprising an automatic analyzer for analyzing a patient specimen, a conveyance device for conveying the specimen to the automatic analyzer, and a control unit for controlling the automatic analyzer and the conveyance device, the automatic analysis system being characterized in that the control unit causes the automatic analyzer in a standby state to transition to an operation state when patient information is received from a medical information system or the conveyance device.

## Description

### Technical Field

The present invention relates to an automatic analysis system including an automatic analyzer and a conveyance device.

### Background Art

An automatic analysis system includes an automatic analyzer that automatically analyzes a specific component contained in a specimen such as blood or urine, and a conveyance device that performs a preprocess on the specimen and conveys the specimen subjected to the preprocess to the automatic analyzer. In an examination room in which the automatic analysis system is used, it is required to shorten a time from reception of a specimen to an output of an examination result regardless of a general specimen which is a specimen of a general patient such as an inpatient or an outpatient, or an urgent specimen for handling with an emergency patient.

PTL 1 discloses an automatic analysis system in which, when occurrence of an urgent examination is recognized, an automatic analyzer is caused to execute a required preparation process before a specimen measurement, thereby shortening a time.

### Citation List

### Patent Literature

PTL 1: JP5216408B

### Summary of Invention

### Technical Problem

However, PTL 1 does not consider the automatic analyzer in a standby state in which although the automatic analyzer is energized, a mechanical system is stopped. When the automatic analyzer is in the standby state, it takes time to output an analysis result of the specimen.

Therefore, an object of the invention is to provide an automatic analysis system capable of shortening a time from reception of a specimen to an output of an examination result even when an automatic analyzer is in a standby state.

### Solution to Problem

In order to achieve the above object, the invention provides an automatic analysis system, and the automatic analysis system includes: an automatic analyzer configured to analyze a specimen of a patient; a conveyance device configured to convey the specimen to the automatic analyzer; and a control unit configured to control the automatic analyzer and the conveyance device. When information on the patient is received from a medical information system or the conveyance device, the control unit causes the automatic analyzer to transition from a standby state to an operation state.

### Advantageous Effects of Invention

According to the invention, it is possible to provide an automatic analysis system capable of shortening a time from reception of a specimen to an output of a result even when an automatic analyzer is in a standby state.

### Brief Description of Drawings

[FIG. 1] FIG. 1 is a diagram showing a configuration example of an automatic analysis system according to Embodiment 1.
[FIG. 2] FIG. 2 is a diagram showing a configuration example of an automatic analysis system according to Embodiment 2.
[FIG. 3] FIG. 3 is a diagram showing an example of a processing flow according to Embodiment 2.
[FIG. 4] FIG. 4 is a diagram showing an example of a processing flow according to Embodiment 3.
[FIG. 5] FIG. 5 is a diagram showing an example of a processing flow according to Embodiment 4.
[FIG. 6] FIG. 6 is a diagram showing an example of a setting screen according to Embodiment 5.
[FIG. 7] FIG. 7 is a diagram showing a configuration example of an automatic analysis system according to Embodiment 6.
[FIG. 8] FIG. 8 is a diagram showing an example of a processing flow according to Embodiment 6.

### Description of Embodiments

Hereinafter, embodiments of an automatic analysis system according to the invention will be described with reference to the accompanying drawings.

### Embodiment 1

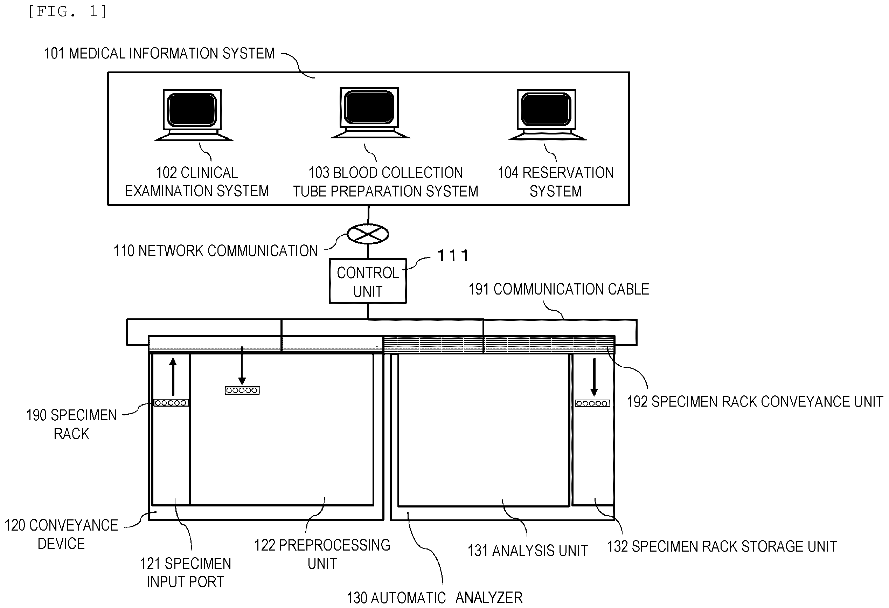

A configuration example of an automatic analysis system according to Embodiment 1 will be described with reference to FIG. 1. The automatic analysis system includes a control unit 111, an automatic analyzer 130, and a conveyance device 120 that are connected by a communication cable 191. A medical information system 101 may be connected to the control unit 111 via a network communication 110. Hereinafter, the units will be described.

The control unit 111 is a device that controls operations of the automatic analyzer 130 and the conveyance device 120, and is implemented by, for example, a computer. The control unit 111 may control the operations of the automatic analyzer 130 and the conveyance device 120 based on information transmitted from the medical information system 101.

The automatic analyzer 130 is a device that automatically analyzes a specific component contained in a specimen such as blood or urine supplied from a patient, and includes an analysis unit 131 and a specimen rack storage unit 132. The analysis unit 131 is a unit that executes analysis on the specimen. The specimen rack storage unit 132 storages a specimen rack 190 on which a plurality of specimen tubes accommodating specimens are placed. The specimen rack 190 stored in the specimen rack storage unit 132 is a rack after being subjected to the analysis or a rack in which an error occurs. A barcode, an RFID, or the like is attached to at least one of the specimen tube and the specimen rack 190 as an identifier for specifying the specimen.

The conveyance device 120 includes a preprocessing unit 122 that performs a preprocess on the specimen rack 190 input into a specimen input port 121, and a specimen rack conveyance unit 192 that conveys the specimen rack 190 after being subjected to the preprocess to the automatic analyzer 130. The preprocess performed by the preprocessing unit 122 includes, for example, specimen classification, centrifugal separation, unplugging, aliquoting, label attachment, plugging, and storage.

The medical information system 101 is a backbone system that handles medical information of the entire hospital, and includes a clinical examination system 102, a blood collection tube preparation system 103, a reservation system 104, and the like. The clinical examination system 102 is a system that shares and manages examination request information, progress of examination results, outputs of examination results, and examination information for transmitting and receiving examination orders. Information such as an examination request registered in the clinical examination system 102 may be transmitted to the control unit 111 and used to control the operations of the automatic analyzer 130 and the conveyance device 120. Information input to the blood collection tube preparation system 103 or the reservation system 104 may also be transmitted to the control unit 111 and used to control the operations of the automatic analyzer 130 and the conveyance device 120.

In the automatic analyzer 130, a standby state and an operation state are selectively used. The standby state is a state in which although the automatic analyzer 130 is energized, a mechanical system for operating an aliquoting probe, a reaction disk, and the like provided in the automatic analyzer 130 is stopped. The operation state is a state in which the mechanical system operates and the specimen can be immediately analyzed. That is, when the automatic analyzer 130 is in the standby state, the specimen cannot be analyzed until transitioning to the operation state is completed, and a time for an output of an examination result is required.

Therefore, in Embodiment 1, the time required for the output of the examination result is shortened by starting to cause the automatic analyzer 130 to transition from the standby state to the operation state at a timing when patient information of the specimen is registered in the medical information system 101. More specifically, the control unit 111 to which the patient information registered in the medical information system 101 is transmitted starts to cause the automatic analyzer 130 to transition from the standby state to the operation state, and the transitioning proceeds while the specimen rack 190 is conveyed. The transitioning from the standby state to the operation state is started early, so that a time from reception of the specimen to the output of the examination result is shortened.

A timing when the automatic analyzer 130 is caused to transition from the standby state to the operation state is not limited to the timing when the patient information is registered in the medical information system 101. For example, the transitioning of the automatic analyzer 130 from the standby state to the operation state may be started at a timing when the specimen rack 190 is input into the specimen input port 121 of the conveyance device 120. More specifically, the control unit 111 that receives the patient information associated with the identifier attached to the specimen rack 190 input into the specimen input port 121 starts to cause the automatic analyzer 130 to transition from the standby state to the operation state, and the transitioning proceeds while the specimen rack 190 is conveyed. The transitioning from the standby state to the operation state is started early, so that the time from the reception of the specimen to the output of the examination result is shortened.

A start operation, which is an operation of causing the automatic analyzer 130 to transition from the standby state to the operation state, includes a reset operation and a confirmation operation. The reset operation is an operation of initializing the automatic analyzer 130, and is an operation of returning the units to an initial position or discharging the specimen rack 190 remaining in the automatic analyzer 130. The confirmation operation is an operation of confirming that the mechanical system can be operated, and may include an operation of confirming that a liquid surface detection sensor provided in the aliquoting probe is normal.

Even when the conveyance device 120 is in a standby state, the control unit 111 may start to cause the conveyance device 120 to transition from the standby state to the operation state at the timing when the patient information is registered in the medical information system 101. In the conveyance device 120, the transitioning from the standby state to an operation state is also started early, thereby shortening the time.

### Embodiment 2

Embodiment 1 describes that the control unit 111 that receives the patient information from the medical information system 101 or the conveyance device 120 causes the automatic analyzer 130 to transition from the standby state to the operation state. Embodiment 2 describes that the preprocess is performed in the conveyance device 120 in parallel with the transitioning of the automatic analyzer 130 from the standby state to the operation state.

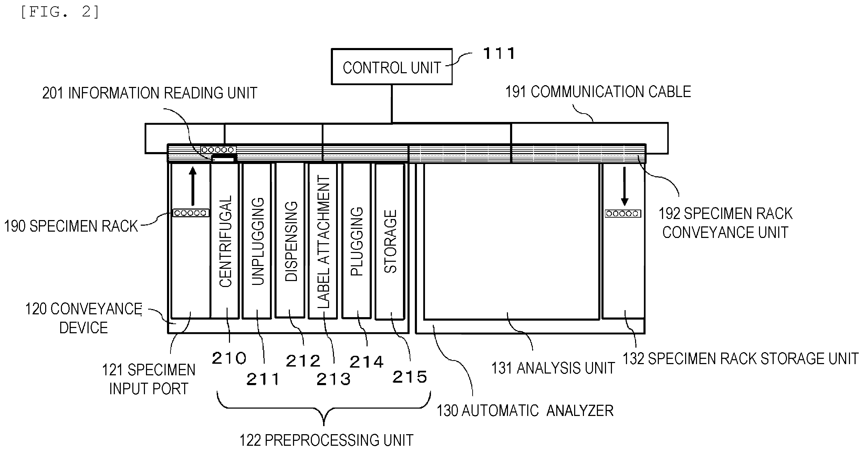

A configuration example of an automatic analysis system according to Embodiment 2 will be described with reference to FIG. 2. As in Embodiment 1, the automatic analysis system includes the control unit 111, the automatic analyzer 130, and the conveyance device 120 that are connected by the communication cable 191. The control unit 111 and the automatic analyzer 130 have the same configurations as those of Embodiment 1, and thus description thereof will be omitted.

The conveyance device 120 includes an information reading unit 201, the preprocessing unit 122, and the specimen rack conveyance unit 192. The information reading unit 201 is a device that reads an identifier attached to the specimen rack 190 input into the specimen input port 121, and is, for example, a barcode reader or an RFID reader. The identifier of the specimen rack 190 is read immediately after the specimen rack 190 is input into the specimen input port 121.

The preprocessing unit 122 is a unit that performs the preprocess on the specimen rack 190 input into the specimen input port 121, and includes at least one of a centrifugal separation unit 210, an unplugging unit 211, an aliquoting unit 212, a label attaching unit 213, a plugging unit 214, and a storage unit 215.

The centrifugal separation unit 210 is a unit that performs the centrifugal separation on a specimen. The unplugging unit 211 is a unit that opens a lid of the specimen tube accommodating a specimen. The aliquoting unit 212 is a unit that aliquots the specimen accommodated in the specimen tube into other plurality of containers. An original specimen to be aliquoted is referred to as a parent specimen, and the specimen aliquoted into another container is referred to as a child specimen. The label attaching unit 213 is a unit that attaches an identifier for identifying the child specimen to the container. The plugging unit 214 is a unit that closes the lid of the specimen tube. The storage unit 215 is a unit that stores the specimen tube after being subjected to the analysis. These units may be provided in any order.

The specimen rack conveyance unit 192 is a unit that conveys the specimen rack 190 subjected to various preprocesses to the automatic analyzer 130.

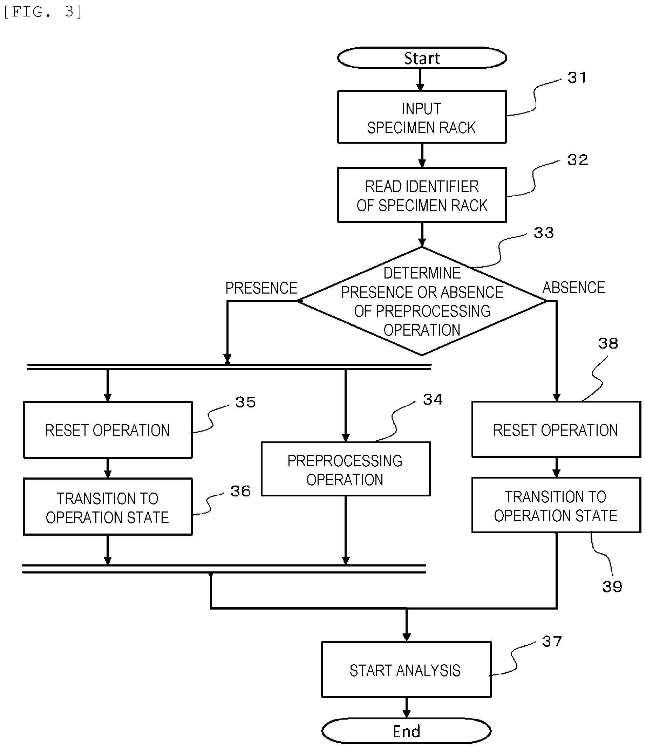

A processing flow executed in Embodiment 2 will be described step by step with reference to FIG. 3.

### (Step 31)

The specimen rack 190 is input into the specimen input port 121.

### (Step 32)

The information reading unit 201 reads the identifier attached to the specimen rack 190 immediately after being input into the specimen input port 121, and transmits the read identifier to the control unit 111.

### (Step 33)

The control unit 111 determines presence or absence of a preprocessing operation for the specimen in the specimen rack 190 based on the identifier transmitted from the information reading unit 201. When the preprocessing operation is present, the process proceeds to step 34 and step 35, and when no preprocessing operation is present, the process proceeds to step 38. The control unit 111 receives the patient information associated with the identifier transmitted from the information reading unit 201.

### (Step 34)

The control unit 111 causes the specimen rack 190 to be conveyed to the preprocessing unit 122, and causes the preprocessing operation to be performed on the specimen in the specimen rack 190.

### (Step 35)

The control unit 111 causes the automatic analyzer 130 to execute the reset operation in parallel with step 34.

### (Step 36)

After executing the reset operation in step 35, the automatic analyzer 130 transitions to the operation state by executing the confirmation operation, and is on standby until the preprocessing operation performed by the preprocessing unit 122 is completed.

### (Step 37)

The control unit 111 causes the automatic analyzer 130 to transition to the operation state to start an analysis operation.

### (Step 38)

The control unit 111 causes the automatic analyzer 130 to execute the reset operation.

### (Step 39)

After executing the reset operation in step 38, the automatic analyzer 130 transitions to the operation state by executing the confirmation operation.

According to the processing flow described with reference to FIG. 3, the control unit 111 starts to cause the automatic analyzer 130 to transition from the standby state to the operation state at the timing when the patient information is received from the conveyance device 120. That is, as in Embodiment 1, since the transitioning from the standby state to the operation state is started early, the time from the reception of the specimen to the output of the examination result is shortened. In parallel with the transitioning of the automatic analyzer 130 from the standby state to the operation state, the preprocess is performed in the conveyance device 120, and thus the time from the reception of the specimen to the output of the examination result can be shortened.

### Embodiment 3

Embodiment 2 describes that the preprocess is performed in the conveyance device 120 in parallel with the transitioning of the automatic analyzer 130 from the standby state to the operation state. Embodiment 3 describes that the automatic analyzer 130 is caused to execute an additional maintenance process while the preprocess is performed in the conveyance device 120.

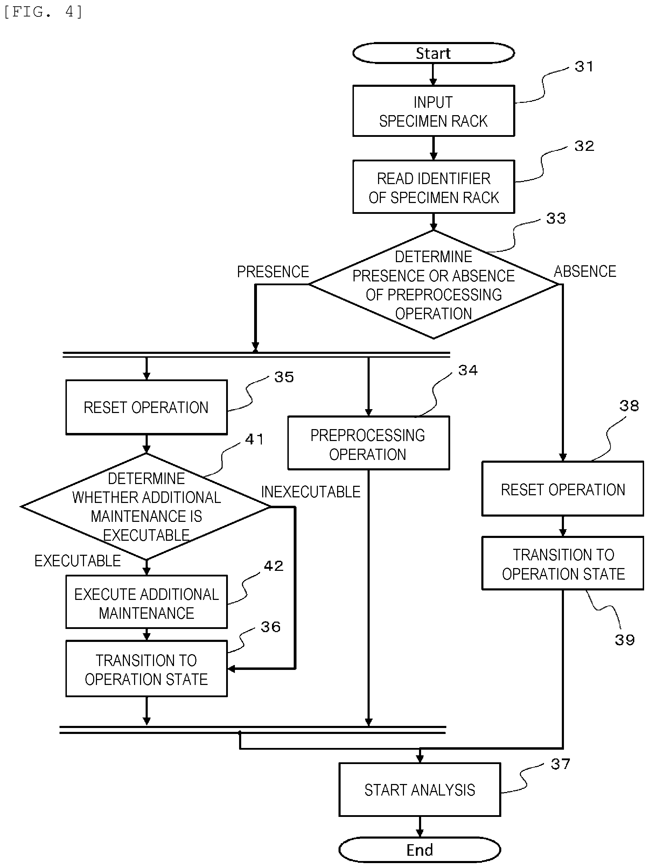

A processing flow executed in Embodiment 3 will be described with reference to FIG. 4. In FIG. 4, steps 41 and 42 are added to FIG. 3, and the description of steps other than these steps is omitted.

### (Step 41)

The control unit 111 calculates a time required for the preprocessing operation in step 34 based on the identifier transmitted from the information reading unit 201, and determines whether an additional maintenance process can be executed. If the additional maintenance process can be executed, the process proceeds to step 42, and if the additional maintenance process cannot be executed, the process proceeds to step 35. Whether the additional maintenance process can be executed is determined based on a comparison between a time Tp required for the preprocessing operation and a time Tm required for the additional maintenance process. That is, if Tp > Tm, it is determined that the additional maintenance process can be executed.

### (Step 42)

The control unit 111 causes the automatic analyzer 130 to execute the additional maintenance process. The additional maintenance process may be a single process, a process of continuously repeating the single process a plurality of times, or a process of combining different processes. The execution of the additional maintenance process improves analysis accuracy of the automatic analyzer 130.

As a specific example of the additional maintenance process, cleaning in a reagent flow path, a cell cleaning prime, and an air purge will be described. The cell cleaning prime and the air purge are maintenance processes having relatively short effective times.

The cleaning in a reagent flow path is a maintenance process of replacing a reagent and the like remaining in a reagent flow path, and is performed a plurality of times when an elapsed time from when the automatic analyzer 130 enters the standby state is long, for example, when the elapsed time is one hour or more.

The cell cleaning prime is a process of refilling a detergent in a flow path connected to a detergent probe that discharges the detergent to a container of a biological specimen reaction unit.

The air purge is a process of replacing system water in a flow path connected to a reagent probe for suctioning a reagent with degassed water or removing bubbles in the flow path by continuously flowing pure water.

According to the processing flow described with reference to FIG. 4, as in Embodiment 1, the transitioning from the standby state to the operation state is started early, so that the time from the reception of the specimen to the output of the examination result is shortened. As in Embodiment 2, in parallel with the transitioning to the operation state, the preprocess is performed, and thus the time from the reception of the specimen to the output of the examination result can be shortened. Further, the analysis accuracy of the automatic analyzer 130 can be improved by executing the additional maintenance process while the preprocess is performed.

### Embodiment 4

Embodiment 2 describes that the information reading unit 201 of the conveyance device 120 reads the identifier of the specimen rack 190. When the identifier is read, some errors may occur. In Embodiment 4, a case will be described in which an error occurs at the time of reading the identifier.

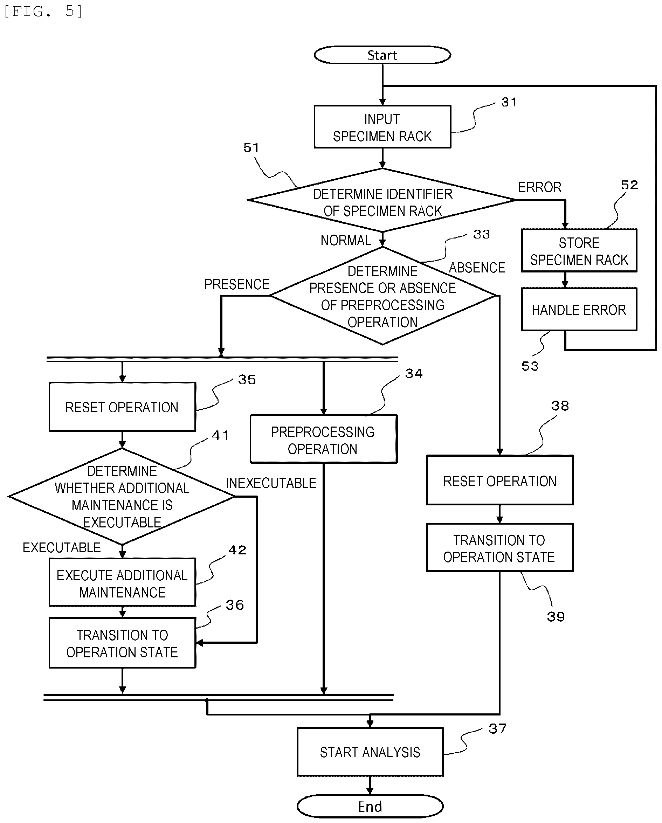

A processing flow executed in Embodiment 4 will be described with reference to FIG. 5. In FIG. 5, step 32 in FIG. 4 is replaced with step 51, steps 52 and 53 are added, and thus the description of steps other than these steps is omitted.

### (Step 51)

The information reading unit 201 reads the identifier attached to the specimen rack 190 immediately after being input into the specimen input port 121, and transmits the read identifier to the control unit 111. The control unit 111 determines whether the transmitted identifier is normal. If a determination result is normal, the process proceeds to step 33, and if an error is included, the process proceeds to step 52. The included error may be, for example, a reading error due to lack of information on the identifier, an error due to incorrect information, or an error due to an unanalyzable item request.

### (Step 52)

The control unit 111 stores the specimen rack 190 in the specimen rack storage unit 132.

### (Step 53)

After recovering the error by performing a handling process according to a type of the error, the control unit 111 returns the process to step 31, and causes the specimen rack 190 stored in the specimen rack storage unit 132 to be input again.

According to the processing flow described with reference to FIG. 5, as in Embodiment 1, the transitioning from the standby state to the operation state is started early, so that the time from the reception of the specimen to the output of the examination result is shortened. As in Embodiment 2, in parallel with the transitioning to the operation state, the preprocess is performed, and thus the time from the reception of the specimen to the output of the examination result can be shortened. As in Embodiment 3, since the additional maintenance process is executed while the preprocess is performed, the analysis accuracy of the automatic analyzer 130 can be improved. Further, when an error occurs at the time of reading the identifier, the automatic analyzer 130 is maintained in the standby state, the specimen rack 190 is input again after the error is recovered, and thus it is possible to avoid a failure due to the error.

### Embodiment 5

Embodiment 1 describes that the control unit 111 that receives the patient information from the medical information system 101 or the conveyance device 120 causes the automatic analyzer 130 to transition from the standby state to the operation state. The automatic analyzer 130 that transitions to the operation state repeatedly performs a cleaning operation until the specimen rack 190 arrives, and thus when it takes a long time for the arrival of the specimen rack 190, resources such as water and detergent used for the cleaning operation are wasted. Embodiment 6 describes that whether to cause the automatic analyzer 130 to transition to the operation state or to transition to a preparation state for preventing the waste of the resources is selected according to an arrival time of the specimen rack 190. The preparation state is a state in which the mechanical system for operating the aliquoting probe, the reaction disk, and the like provided in the automatic analyzer 130 operates and the specimen can be immediately analyzed, but the cleaning operation is not performed. That is, the resources are saved in the preparation state as compared with the operation state.

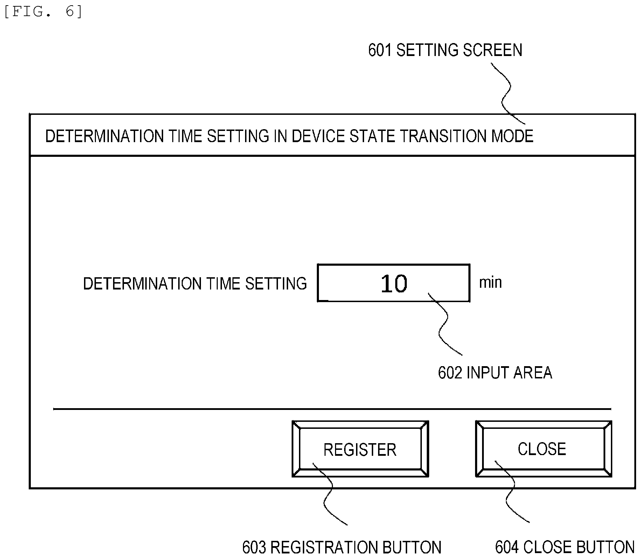

An example of a setting screen used in Embodiment 5 will be described with reference to FIG. 6. A setting screen 601 shown in FIG. 6 is a screen for setting a determination time, and includes an input area 602, a registration button 603, and a close button 604. The determination time is input to the input area 602. When the determination time input to the input area 602 is to be registered, the registration button 603 is pressed. When the setting screen 601 is to be closed, the close button 604 is pressed.

The determination time set on the setting screen 601 is used when the control unit 111 that receives the patient information from the medical information system 101 or the conveyance device 120 determines which of the operation state and the preparation state is to be selected. That is, a time Ta until the specimen rack 190 arrives at the automatic analyzer 130 is compared with a determination time Tj. If Ta < Tj, the operation state is selected, and if Ta ≥ Tj, the preparation state is selected. The automatic analyzer 130 in the preparation state transitions to the operation state when the specimen rack 190 arrives.

According to Embodiment 5, when the time Ta from the reception of the patient information by the control unit 111 to the arrival of the specimen rack 190 at the automatic analyzer 130 is equal to or longer than the determination time Tj, the automatic analyzer 130 transitions to the preparation state, and thus the resources such as water and detergent used for the cleaning operation can be saved. The preparation state may be implemented by performing the cleaning operation without using the detergent and saving the detergent.

### Embodiment 6

Embodiments 1 to 5 describe the case in which the specimen rack 190 is input to the single specimen input port 121. Embodiment 6 describes a case in which the specimen rack 190 is input to a plurality of specimen input ports.

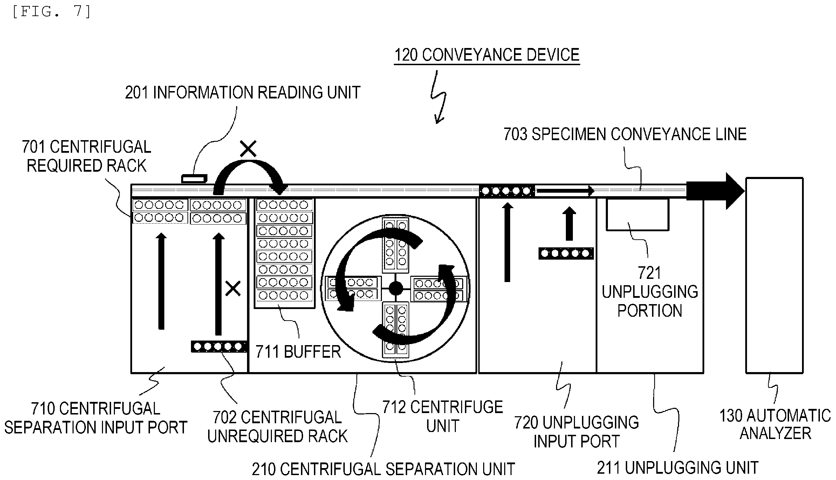

A configuration example of the conveyance device 120 according to Embodiment 6 will be described with reference to FIG. 7. The conveyance device 120 according to Embodiment 6 includes the centrifugal separation unit 210 and the unplugging unit 211.

The centrifugal separation unit 210 includes a centrifugal separation input port 710, a buffer 711, and a centrifuge unit 712. The specimen rack is input into the centrifugal separation input port 710. The specimen rack input into the centrifugal separation input port 710 is classified into a centrifugal required rack 701 which is a specimen rack requiring the centrifugal separation and a centrifugal unrequired rack 702 which is a specimen rack not requiring the centrifugal separation based on the identifier read by the information reading unit 201. The centrifugal required rack 701 is placed in the buffer 711, and the centrifugal unrequired rack 702 is moved to a specimen conveyance line 703. The buffer 711 accumulates a certain number of the centrifugal required racks 701, and sends the centrifugal required racks 701 to the centrifuge unit 712 in an accumulation order. In the centrifuge unit 712, the specimen in the centrifugal required rack 701 sent from the buffer 711 is subjected to the centrifugal separation.

The unplugging unit 211 includes an unplugging input port 720 and an unplugging portion 721. The specimen rack is input into the unplugging input port 720, and the lid of the specimen tube placed on the specimen rack is opened in the unplugging portion 721. That is, the conveyance device 120 according to Embodiment 6 includes the centrifugal separation input port 710 and the unplugging input port 720 as the plurality of specimen input ports.

When the buffer 711 is filled with the centrifugal required racks 701 and the centrifugal required rack 701 also stays in the centrifugal separation input port 710, the input centrifugal unrequired rack 702 stagnates in the centrifugal separation input port 710 and reaches the automatic analyzer 130 with a delay, and thus the output of the examination result is delayed.

Therefore, in Embodiment 6, a time until the examination result is output is shortened by selectively using the plurality of specimen input ports. More specifically, by inputting the centrifugal required rack 701 into the centrifugal separation input port 710 and inputting the centrifugal unrequired rack 702 into the unplugging input port 720, stagnation of the centrifugal unrequired rack 702 is prevented and the output of the examination result of the specimen is not delayed. Arrangement positions of the centrifugal separation input port 710 and the unplugging input port 720 are not limited to the positions shown in FIG. 7, and may be any positions as long as the positions are upstream of the corresponding preprocessing units. For example, the arrangement position of the unplugging input port 720 may be between the centrifugal separation input port 710 and the centrifuge unit 712 or on a left side of the centrifugal separation input port 710.

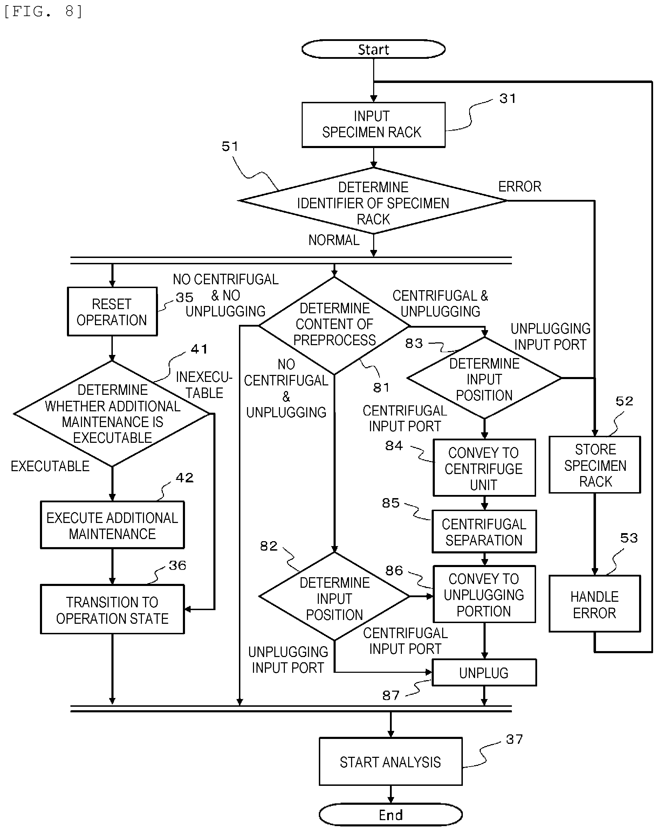

A processing flow executed in Embodiment 6 will be described with reference to FIG. 8. In FIG. 8, step 33, step 38, and step 39 are deleted from FIG. 5, and step 34 is replaced with step 81 to step 87, and thus the description of steps other than steps 81 to 87 is omitted.

### (Step 81)

The control unit 111 determines a content of the preprocess based on the identifier transmitted from the information reading unit 201. When the content of the preprocess includes neither the centrifugal separation nor the unplugging, the process proceeds to step 37. That is, the specimen rack is directly conveyed to the automatic analyzer 130. When the content of the preprocess does not include the centrifugal separation and includes the unplugging, the process proceeds to step 82, and when the content of the preprocess includes both the centrifugal separation and the unplugging, the process proceeds to step 83.

### (Step 82)

The control unit 111 determines the position where the specimen rack is input. When the specimen rack is input into the centrifugal separation input port 710, the process proceeds to step 86, and when the specimen rack is input into the unplugging input port 720, the process proceeds to step 87.

### (Step 83)

The control unit 111 determines the position where the specimen rack is input. When the specimen rack is input into the centrifugal separation input port 710, the process proceeds to step 84. When the specimen rack is input into the unplugging input port 720, the centrifugal separation cannot be performed, and thus the process proceeds to step 52 assuming that an error occurs.

### (Step 84)

The control unit 111 causes the specimen rack to be conveyed to the centrifuge unit 712.

### (Step 85)

The centrifuge unit 712 executes the centrifugal separation on the specimen in the conveyed specimen rack.

### (Step 86)

The control unit 111 causes the specimen rack after being subjected to the centrifugal separation to be conveyed to the unplugging portion 721.

### (Step 85)

The unplugging portion 721 unplugs the specimen tube mounted on the conveyed specimen rack, and conveys the specimen rack after being unplugged to the automatic analyzer 130.

According to the processing flow described with reference to FIG. 8, as in Embodiment 1, the transitioning from the standby state to the operation state is started early, so that the time from the reception of the specimen to the output of the examination result is shortened. As in Embodiment 2, in parallel with the transitioning to the operation state, the preprocess is performed, and thus the time from the reception of the specimen to the output of the examination result can be shortened. As in Embodiment 3, since the additional maintenance process is executed while the preprocess is performed, the analysis accuracy of the automatic analyzer 130 can be improved. As in Embodiment 4, when an error occurs at the time of reading the identifier, the automatic analyzer 130 is maintained in the standby state, the specimen rack 190 is input again after the error is recovered, and thus it is possible to avoid the failure due to the error.

Further, since the plurality of specimen input ports are selectively used, the centrifugal unrequired rack 702 does not stagnate in the centrifugal separation input port 710, and a delayed output of the examination result can be prevented. A conveyance destination of the specimen rack is determined based on the content of the preprocess and the position where the specimen rack is input, and thus an appropriate preprocess is performed on the specimen. For example, when the centrifugal required rack 701 is erroneously input into the unplugging input port 720, it is considered that an error occurs, and thus it is possible to avoid a failure due to the preprocess.

The embodiments of the invention have been described above. The invention is not limited to the above-described embodiments, and the components may be modified without departing from the gist of the invention. The plurality of components disclosed in the above embodiments may be combined as appropriate. Further, some components may be deleted from all the components shown in the above embodiments.

### Reference Signs List

- 101:: medical information system
- 102:: clinical examination system
- 103:: blood collection tube preparation system
- 104:: reservation system
- 110:: network communication
- 111:: control unit
- 120:: conveyance device
- 121:: specimen input port
- 122:: preprocessing unit
- 130:: automatic analyzer
- 131:: analysis unit
- 132:: specimen rack storage unit
- 190:: specimen rack
- 191:: communication cable
- 192:: specimen rack conveyance unit
- 201:: information reading unit
- 210:: centrifugal separation unit
- 211:: unplugging unit
- 212:: aliquoting unit
- 213:: label attaching unit
- 214:: plugging unit
- 215:: storage unit
- 601:: setting screen
- 602:: input area
- 603:: registration button
- 604:: close button
- 701:: centrifugal required rack
- 702:: centrifugal unrequired rack
- 703:: specimen conveyance line
- 710:: centrifugal separation input port
- 711:: buffer
- 712:: centrifuge unit
- 720:: unplugging input port
- 721:: unplugging portion

## Claims

1. An automatic analysis system comprising:
an automatic analyzer configured to analyze a specimen of a patient;
a conveyance device configured to convey the specimen to the automatic analyzer; and
a control unit configured to control the automatic analyzer and the conveyance device, wherein
when information on the patient is received from a medical information system or the conveyance device, the control unit causes the automatic analyzer to transition from a standby state to an operation state.

2. The automatic analysis system according to claim 1, wherein
when the information on the patient is received from the medical information system, the control unit causes the conveyance device to transition from a standby state to an operation state.

3. The automatic analysis system according to claim 1, wherein
the control unit causes the conveyance device to perform a preprocess on the specimen in parallel with the transitioning of the automatic analyzer to the operation state.

4. The automatic analysis system according to claim 3, wherein
when the conveyance device performs the preprocess, the control unit causes the automatic analyzer to execute an additional maintenance process.

5. The automatic analysis system according to claim 1, wherein
the conveyance device includes an information reading unit configured to read an identifier of the specimen, and
when the identifier read by the information reading unit includes an error, the control unit stores the specimen and maintains the automatic analyzer in the standby state.

6. The automatic analysis system according to claim 1, wherein
when a time from the reception of the information on the patient to arrival of the specimen at the automatic analyzer is a predetermined time or longer, the control unit causes the automatic analyzer to transition to a preparation state in which a resource is saved as compared with the operation state.

7. The automatic analysis system according to claim 1, wherein
the conveyance device has a plurality of input ports into which the specimen is input, and
the control unit determines a conveyance destination of the specimen based on a content of a preprocess performed on the specimen and a position of the input port into which the specimen is input.
